# EUROPEAN PATENT SPECIFICATION

(11) **EP 0 750 940 B1**
(45) Date of publication and mention of the grant of the patent: **12.12.2001**
(21) Application number: 96304590.1
(22) Date of filing: 20.06.1996
(51) Int. Cl.: B01J 19/32

(54) **Structured packing**
Strukturierte Packung
Garnissage organisé

(30) Priority: 27.06.1995 US 495159
(43) Date of publication of application: 02.01.1997
(73) Proprietor: THE BOC GROUP, INC., Murray Hill, New Providence, New Jersey 07974 (US)
(72) Inventor: McKeigue, Kevin, Berkeley Heights, New Jersey 07922 (US); Natarajan, Venkat, Scotch Plains, New Jersey 07076 (US)
(74) Representative: Wickham, Michael

(56) References cited:
- EP-A- 0 158 917
- EP-A- 0 209 898
- EP-A- 0 218 417
- FR-A- 2 203 671
- US-A- 4 634 534
- US-A- 4 668 443
- US-A- 5 057 250

## Description

The present invention relates to a liquid-vapour contact column containing a structured packing for producing intimate contact between vapour and liquid phases. More particularly, the present invention relates to such a liquid-vapour contact column containing a structured packing formed of a plurality of juxtaposed sheets having corrugations to define fine flow channels.

In many chemical process applications, for instance heat exchange, adsorption, distillation, it is necessary to bring liquid and vapour phases into contact with one another. Such contact is induced by various liquid-vapour contact media such as sieve plates, trays and structured packing. Structured packing has found increased use in process applications due to its predictable performance and its low pressure drop characteristics. Structured packing consists of a plurality of juxtaposed sheets having corrugations and can be obtained with various packing densities, angular relationships between the corrugations, and performance characteristics.

Structured packing is used with a liquid distributor placed within a column and above the packing to distribute the liquid phase to the packing. The liquid phase descends within the structured packing as a falling film. At the same time, a vapour phase ascends in the column through vapour passages provided within the packing by the corrugations to cause intimate contact or mixing between the liquid and vapour phases.

Heat and mass transfer between the liquid and vapour phases occurs at the interface between the phases which is located close to the surface of the sheet material making up the structured packing. In the case of mass transfer, the transfer of a component from one phase to the other creates a concentration gradient in the vapour phase within each flow channel in a direction taken normal to the surface of the sheet material. As will be apparent to those skilled in the art, the rate of mass transfer between the phases will be higher when the vapour phase is of uniform concentration and will be lower once such a concentration gradient is established. Similarly, the rate of heat transfer is greater the larger the temperature difference between the two phases at the liquid-vapour interface. Accordingly, it is desirable to have turbulent vapour flow or mixing which inhibits the formation of concentration gradients in the vapour phase in a direction taken normal to the surface of the sheet material and thereby increases the rate of mass and heat transfer between phases. The invention therefore aims at providing a liquid-vapour contact column containing a structured packing which has improved heat and mass transfer characteristics:

According to the present invention there is provided a liquid-vapour contact column containing a structured packing for producing intimate contact between ascending vapour and descending liquid phases, said structured packing comprising:
a plurality of juxtaposed sheets on each of which said liquid phase descends as a film;
said sheets having corrugations defining flow channels for said vapour phase to ascend the structured packing and contact said liquid phase; characterised in that:
said sheets have a plurality of projections, situated on at least one side of each flow channel on at least one side of each of said sheets, configured and orientated so as to produce, in use, turbulent mixing in said vapour phase and thereby inhibit concentration gradients from arising within the vapour phase in directions normal to surfaces of said corrugations defining said flow channels; and
said projections being arranged at spaced apart intervals along each flow channel so that, in use, said turbulence in said vapour phase subsides between each pair of adjacent intervals in the direction of vapour flow, and said projections (54, 55) each have a height (h) in a range of between 5% and 20% of the extent (s) of a flow channel side (s) and the spacing (p) between each pair of adjacent intervals is in a range of between 2 and 12 times said height (h).

Thus, the present invention by producing turbulence tends to produce greater mass transfer between the vapour phase and the liquid phase by inhibiting the formation of a stable concentration gradient in which some of the vapour passing through the flow channels tends not to interact with the liquid film on the surface of the packing. This will increase the performance of the packing with respect to the rate of mass transfer between the liquid and vapour phases. As can be appreciated by those skilled in the art, the production of turbulence could potentially lead to a large increase in the pressure drop in the packing and thus degrade the performance of the packing. In order to prevent such pressure drop, the spacing of the projections is carefully selected so as to produce a subsidence of turbulence between adjacent projections.

A liquid-vapour contact column containing a structured packing according to the invention will now be described by way of example with reference to the accompanying drawings, in which:
Figure 1 is a fragmentary, perspective view of a structured packing in accordance with the present invention, which for purposes of explanation is shown rotated from the vertical to the horizontal;
Figure 2 is a sectional view of the structured packing shown in Figure 1 taken along line 2-2;
Figure 3 is a sectional view of the structured packing shown in Figure 1 taken along line 3-3;
Figure 4 is a fragmentary view of an alternative embodiment of projections to be utilised in a structured packing in accordance with the present invention; and
Figure 5 is a sectional view of the structured packing shown in Figure 4 along line 5-5.

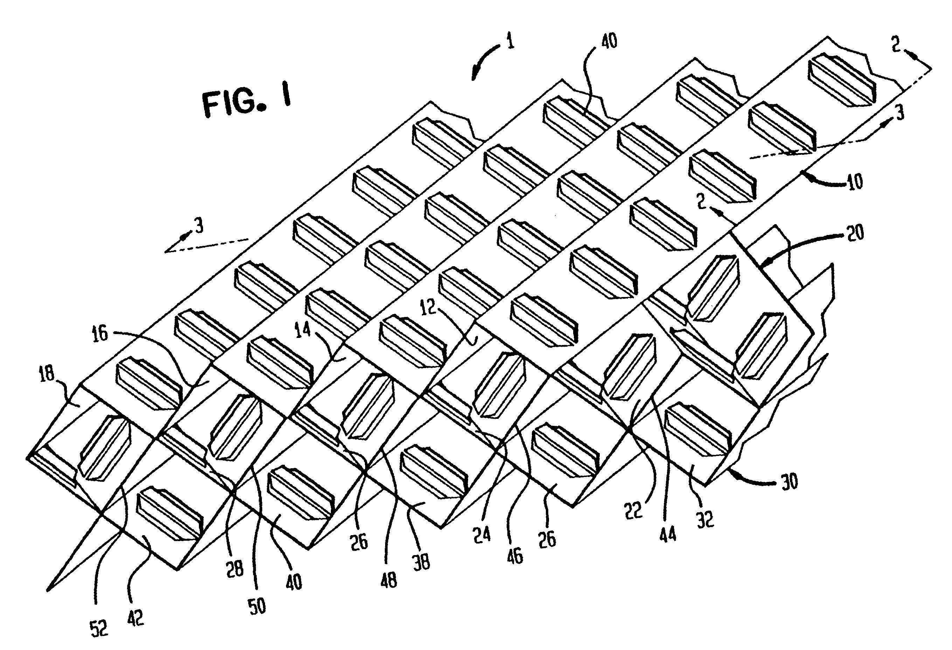

With reference to Figure 1, a structured packing 1 in accordance with the present invention is illustrated. Figure 1 illustrates just three adjacent sheets 10, 20 and 30 of structured packing which are in juxtaposition. Corrugations within sheet 10 define flow channels 12, 14, 16 and 18 which are set opposite to flow channels 22, 24, 26 and 28 in sheet 20. The corrugations in sheet 30 provide flow channels 32, 36, 38, 40 and 42 which are set opposite to flow channels 44, 46, 48, 50, and 52 in sheet 20. In the illustrated embodiment, the second sheet 20 is orientated with its corrugations at an angle to those of sheets 10 and 30 so that the respective flow channels criss-cross. This criss-crossing of flow channels increases the mixing between the vapour and liquid phases.

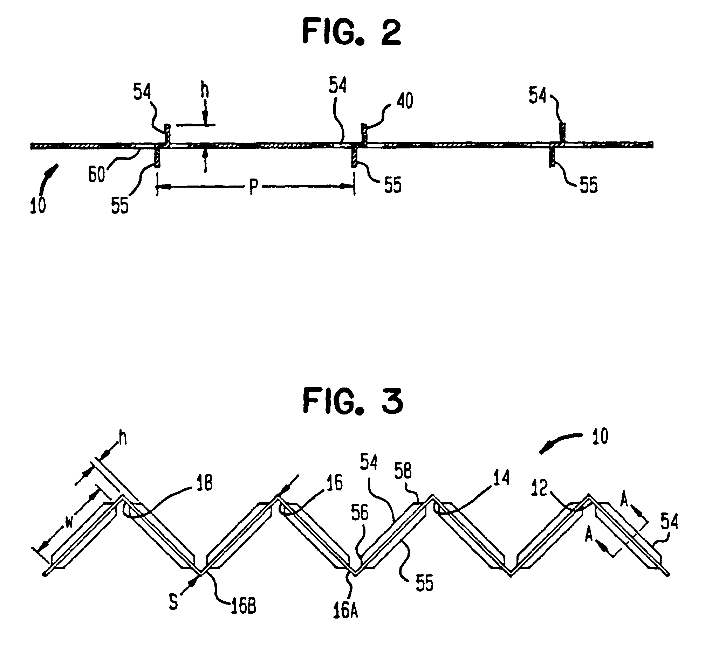

With additional reference to Figures 2 and 3, projections 54 are provided on one side of the sheet 10 and projections 55 on the other side to produce turbulence in the vapour phase as it ascends the structured packing. Projections 54,55 each comprise a cut out tab bent away from sheet 10. Projections 54, 55 have inwardly sloping side edges, such as 56 and 58 to allow liquid film to flow between projections 54, 55. Although not illustrated, the tabs may be provided on only one side of each flow. Alternatively or in addition to the foregoing, projections may be provided on only one side of each of the sheets. For example, such an embodiment of the present invention is possible which is only provided with projections 54 and not projections bent in an opposite direction such as projections 55. The advantage of such alternative embodiments is to decrease interference between the projections 54,55 and the descending liquid phase.

The flow channels 12-18, 22-28, 32-42, and 44-52 each have a channel dimension S. With reference to Figures 2 and 3, the height of projections 54,55, designated by reference h, is preferably in a range of between about 5% and about 20% of the dimension S of the channel side. The projection spacing dimension, "p" is preferably in a range of between about 2 and about 12 times the height of the projections, h. Flow channels exist on both sides of each of corrugated sheets 10, 20 and 30, so that (as viewed in the illustration) projections 54 project upwardly from the surface while projections 55 project downwardly from the surface. Openings 60 are thus formed which allow liquid to flow between the flow channels.

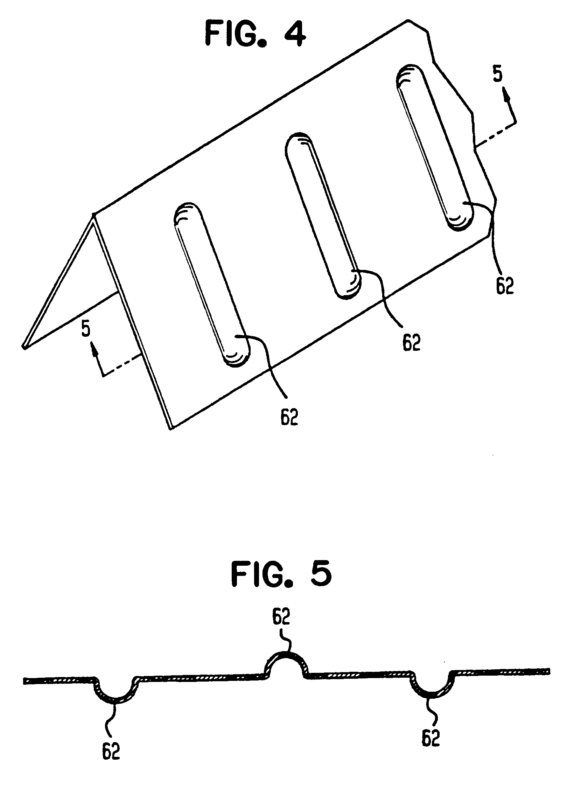

With reference to Figures 4 and 5, a fragment of a flow channel is illustrated to show an alternative projection design. The projections of this embodiment, comprise rib-like embossments 62 which alternate so as to project from both surfaces of the packing sheet.

Although not illustrated, there are still other possible designs and modifications, such as projections similar to those of projections 54,55 but formed of tabs bent at less than right angles to the sheets. Additionally, although the projections illustrated herein are orientated in a direction parallel to the transverse dimension of the sheets, the projections could be orientated at an angle to such transverse dimension.

Additionally, although the projections illustrated herein are shown as single tabs or ribs which extend more or less across one entire wall or surface of a flow channel, groups of small tabs or ribs with intervening spaces could be used to form the turbulence producing projections. These small tabs or ribs could be angled with respect to one another, for instance in a V-like configuration, to produce a greater or lesser degree of turbulence to optimise the packing design for a particular application. In this regard, when turbulence is said to subside between projections it is to be understood that the turbulence subsides in the intervening spaces between such groups of tabs or ribs.

## Claims

1. A liquid-vapour contact column containing a structured packing for producing intimate contact between ascending vapour and descending liquid phases, said structured packing comprising:
a plurality of juxtaposed sheets (10, 20, 30) on each of which liquid phase descends as a film;
said sheets having corrugations defining flow channels (12, 14, 16, 18, 22, 24, 26, 28, 32, 36, 38, 40, 42, 44, 46, 48, 50 and 52) for said vapour phase to ascend the structured packing and contact said liquid phase, wherein:
said sheets have a plurality of projections (54, 55, 62) situated on at least one side of each flow channel on at least one side of each of said sheets, configured and orientated so as to produce, in use, turbulent mixing in said vapour phase and thereby inhibit concentration gradients from arising within the vapour phase in directions normal to surfaces of said corrugations defining said flow channels, **characterised in that**:
said projections (54, 55, 62) are arranged at spaced apart intervals along each flow channel so that, in use, said turbulence in said vapour phase subsides between each pair of adjacent intervals in the direction of vapour flow, and said projections (54, 55) each have a height (h) in a range of between 5% and 20% of the extent (S) of a flow channel side and the spacing (p) between each pair of adjacent intervals is in a range of between 2 and 12 times said height (h).

2. A liquid-vapour contact column according to claim 1, wherein at each interval there is a single elongate projection (54, 55, 62) or a group of projections.

3. A liquid-vapour contact column according to claim 1 or claim 2, wherein said sheets (10, 20, 30) are fabricated from sheet metal.

4. A liquid-vapour contact column according to any one of the preceding claims, wherein the corrugations in each sheet are at an angle to those in adjacent facing sheets.

5. A liquid-vapour contact column according to any one of the preceding claims, wherein each projection comprises a cut-out tab bent away from its sheet.

6. A liquid-vapour contact column according to claim 5, wherein said cut-out tabs have inwardly sloping side edges.

7. A liquid-vapour contact column according to any one of claims 1 to 4, wherein said projections (62) comprise rib-like embossments.

8. A liquid-vapour contact column according to any one of the preceding claims, wherein said projections (54, 55, 62) are orientated transversely to the longitudinal axes of said corrugations.

## Patentansprüche

1. Flüssigkeits-Dampf-Kontaktsäule, die eine strukturierte Packung zum Erzeugen einer innigen Berührung zwischen einer aufsteigenden Dampfphase und einer absteigenden Flüssigkeitsphase enthält, wobei die strukturierte Packung umfasst:
eine Mehrzahl nebeneinander angeordneter Platten (10, 20, 30), auf denen jeweils die Flüssigkeitsphase als Film absteigt,
wobei die Platten Wellungen aufweisen, die Strömungskanäle (12, 14, 16, 18, 22, 24, 26, 28, 32, 36, 38, 40, 42, 44, 46, 48, 50 und 52) zum Aufsteigen der Dampfphase in der strukturierten Packung und Berühren der Flüssigkeitsphase bilden, wobei:
jede Platte eine Mehrzahl von Vorsprüngen (54, 55, 62) aufweist, die auf mindestens einer Seite jedes Strömungskanals auf mindestens einer Seite jeder der genannten Platten angeordnet und so konfiguriert und orientiert sind, dass sie im Betrieb eine turbulente Mischung in der Dampfphase erzeugen und dadurch die Entstehung von Konzentrationsgradienten innerhalb der Dampfphase in zu Oberflächen der die genannten Strömungskanäle bildenden Wellungen normalen Richtungen verhindern, **dadurch gekennzeichnet,**
**dass** die genannten Vorsprünge (54, 55, 62) so angeordnet und in Intervallen entlang jedes Strömungskanals voneinander beabstandet sind, dass im Betrieb die Turbulenz in der Dampfphase zwischen jedem Paar benachbarter Intervalle in Richtung der Dampfströmung nachlässt, und die genannten Vorsprünge (54, 55) jeweils eine Höhe (h) im Bereich zwischen 5% und 20% der Ausdehnung (S) einer Strömungskanalseite haben und der Abstand (p) zwischen jedem Paar benachbarter Intervalle im Bereich zwischen dem Zwei- dem Zwölffachen und genannten Höhe (h) liegt.

2. Flüssigkeits-Dampf-Kontaktsäule nach Anspruch 1, wobei in jedem Intervall ein einziger länglicher Vorsprung (54, 55, 62) oder eine Gruppe von Vorsprüngen vorhanden ist.

3. Flüssigkeits-Dampf-Kontaktsäule nach Anspruch 1 oder 2, wobei die Platten (10, 20, 30) aus Metallblech hergestellt sind.

4. Flüssigkeits-Dampf-Kontaktsäule nach einem der vorhergehenden Ansprüche, wobei die Wellungen in jeder Platte unter einem Winkel zu denjenigen in benachbarten zugewandten Platten verlaufen.

5. Flüssigkeits-Dampf-Kontaktsäulenpackung nach einem der vorhergehenden Ansprüche, wobei jeder Vorsprung eine ausgestanzte Lasche aufweist, die von der Platte weggebogen ist.

6. Flüssigkeits-Dampf-Kontaktsäule nach Anspruch 5, wobei die ausgestanzten Laschen einwärts geneigte Seitenränder haben.

7. Flüssigkeits-Dampf-Kontaktsäule nach einem der Ansprüche 1 bis 4, wobei die Vorsprünge (62) rippenartige Ausprägungen sind.

8. Flüssigkeits-Dampf-Kontaktsäule nach einem der vorhergehenden Ansprüche, wobei die genannten Vorsprünge (54, 55, 62) quer zu den Längsachsen der Wellungen orientiert sind.

## Revendications

1. Colonne de contact liquide-vapeur contenant un garnissage structuré destiné à produire un contact étroit entre une phase vapeur ascendante et une phase liquide descendante, ledit garnissage structuré comprenant :
une pluralité de feuilles juxtaposées (10, 20, 30) sur chacune desquelles ladite phase liquide descend sous forme d'un film ;
lesdites feuilles présentant des plissements définissant des rigoles d'écoulement (12, 14, 16, 18, 22, 24, 26, 28, 32, 36, 38, 40, 42, 44, 46, 48, 50 et 52) pour que ladite phase vapeur monte dans le garnissage structuré et entre en contact avec ladite phase liquide, dans laquelle
lesdites feuilles ont une pluralité de saillies (54, 55, 62) situées sur au moins un côté de chaque rigole d'écoulement sur au moins un côté de chacune desdites feuilles, configurées et orientées de manière à produire, à l'utilisation, un mélange turbulent dans ladite phase vapeur et ainsi à empêcher les gradients de concentrations de survenir dans la phase vapeur dans des directions normales aux surfaces desdits plissements définissant lesdites rigoles d'écoulement,
***caractérisée en ce que***
lesdites saillies (54, 55, 62) sont disposées à intervalles espacés le long de chaque rigole d'écoulement afin que, à l'utilisation, ladite turbulence dans ladite phase vapeur s'apaise entre chaque paire d'intervalles adjacents dans la direction de l'écoulement de la vapeur, et lesdites saillies (54, 55) ont chacune une hauteur (h) dans une plage comprise entre 5 % et 20 % de la (des) mesure(s) d'un (des) côté(s) d'une rigole d'écoulement, et l'écartement (p) entre chaque paire d'intervalles adjacents est dans une plage comprise entre 2 et 12 fois ladite hauteur (h).

2. Colonne de contact liquide-vapeur selon la Revendication 1, dans laquelle à chaque intervalle se trouve une seule saillie longitudinale (54, 55, 62) ou un groupe de saillies.

3. Colonne de contact liquide-vapeur selon la Revendication 1 ou la Revendication 2, dans laquelle lesdites feuilles (10, 20, 30) sont fabriquées en tôle.

4. Colonne de contact liquide-vapeur selon l'une quelconque des Revendications précédentes, dans laquelle les plissements de chaque feuille sont en angle par rapport à ceux des feuilles adjacentes en vis-à-vis.

5. Colonne de contact liquide-vapeur selon l'une quelconque des Revendications précédentes, dans laquelle chaque saillie comporte un onglet découpé éloigné par pliage de sa feuille.

6. Colonne de contact liquide-vapeur selon la Revendication 5, dans laquelle lesdits onglets découpés ont des bords latéraux s'inclinant vers l'intérieur.

7. Colonne de contact liquide-vapeur selon l'une quelconque des Revendications 1 à 4, dans laquelle lesdites saillies (62) comprennent des bossages en forme de nervures.

8. Colonne de contact liquide-vapeur selon l'une quelconque des Revendications précédentes, dans laquelle lesdites saillies (54, 55, 62) sont orientées transversalement aux axes longitudinaux desdits plissements.
